# EUROPEAN PATENT SPECIFICATION

(11) **EP 2 334 417 B1**
(45) Date of publication and mention of the grant of the patent: **14.11.2012**
(21) Application number: 09786191.8
(22) Date of filing: 31.08.2009
(51) Int. Cl.: B01F 1/00, B01F 5/04, B01F 15/02, C02F 1/68, E04H 4/12, B01F 15/06, C02F 103/42

(54) **AUTOMATIC DRY GRANULAR CHEMICAL DISPENSER, FOR EXAMPLE FOR THE CHLORINATION OF WATER IN A SWIMMING POOL**
AUTOMATISCHER CHEMIKALIENTROCKENGRANULAT-DISPENSER, BEISPIELSWEISE ZUR CHLORUNG VON WASSER IN EINEM SCHWIMMBAD
DISTRIBUTEUR AUTOMATIQUE DE PRODUIT CHIMIQUE SOUS FORME DE GRANULÉS SECS, PAR EXEMPLE POUR LA CHLORATION DE L'EAU D'UNE PISCINE

(30) Priority: 13.10.2008 ZA 200808719
(43) Date of publication of application: 22.06.2011
(73) Proprietor: Palmer, Leslie Richard, 2016 Johannesburg (ZA); Robertson, John Neil, Waterkloof, 4001 Pretoria (ZA)
(72) Inventor: Palmer, Leslie Richard, 2016 Johannesburg (ZA); Robertson, John Neil, Waterkloof, 4001 Pretoria (ZA)
(74) Representative: Thomson, Neil David
(86) International application number: PCT/IB2009/006673
(87) International publication number: WO 2010/043940

(56) References cited:
- WO-A-99/29403
- US-A- 3 626 972
- US-A- 3 710 817
- ZA-A- 9 811 109

## Description

### FIELD OF THE INVENTION

This invention relates to a dispenser of dry granular chemicals and more particularly to a dispenser of measured quantities of granular chemicals capable of releasing chlorine into swimming pool water.

### BACKGROUND OF THE INVENTION

In order to maintain swimming pool water clear and suitable for pool users, chemicals must be added to the water. The most usual chemical used to control undesired organic growth in the pool is chlorine. The chlorine is derived from granular chlorine. This should be introduced into the pool in dosed quantities and at regular intervals. Usually this granular material is introduced by hand, which can be burdensome.

A number of automatic chlorine dispensers have been proposed, including those disclosed in WO 99/29403 and ZA 98/11109. However, due to the hygroscopic nature of chlorine granules, most of these automatic dispensers suffer from the disadvantage of not being able to prevent moisture from contacting the granules prior to them being introduced into the pool water. As a result, over time, the moistened chlorine granules turn into a sludgy paste, thereby ultimately clogging the dispenser, which is clearly undesirable.

### OBJECT OF THE INVENTION

It is thus an object of this invention to provide a dispenser that will not only automatically meet the chlorine dosing requirements for a swimming pool, but that is also arranged to ensure that the chlorine remains dry up until when it is dispensed into the pool water.

### SUMMARY OF THE INVENTION

In accordance with this invention there is provided a granular chemical dispenser comprising a conduit providing an open ended liquid flow passage, subsidiary inlet and outlet opening to and from the conduit spaced apart along its length, means for introducing an area of low pressure at the subsidiary inlet, the subsidiary outlet opening into a vented chamber connected to a mixing chamber having a dosing compartment opening into the top of the mixing chamber, ganged valves for controlling an inlet and an outlet to and from the dosing compartment, the mixing chamber having an outlet connected to the conduit subsidiary inlet, means for operating the ganged valves on liquid flow through the passage and reversing this operation on the cessation of flow through the passage, and a drying arrangement within or proximate the dosing compartment for keeping air within the dosing compartment and mixing chamber dry, so as to prevent the granular chemical from clogging within the dosing compartment prior to the granular chemical mixing with the liquid flowing through the dispenser.

The drying arrangement may comprise a heat source for generating heat so as to dry the air within the dosing compartment and mixing chamber. Preferably the heat source may comprise an electric element connected to a power source. Alternatively, the heat source may include a light source.

Further features of this invention provide for the compartment inlet to have means for connection to a supply of granular chemicals and the conduit means for connection into a liquid flow supply line, more particularly a return flow supply line from a swimming pool filter installation.

The invention also provides for there to be a holding chamber between the mixing chamber and the subsidiary inlet, for the vented chamber including baffles to smooth the flow there through, for the ganged valves to open the inlet to the compartment when the outlet is closed and vice versa, and for the valve operating at the compartment inlet to carry a projection extending through the inlet.

In one version, the vented chamber, mixing chamber and holding chamber are in line, and run parallel to the conduit. Alternatively, the vented chamber and the holding chamber are arranged concentrically around the mixing chamber.

Still further feature of this invention provide for the means for inducing low pressure in the conduit at the subsidiary inlet to be a venturi or a jet pump.

Conveniently, a non-return valve is fitted proximate the subsidiary inlet, and typically within the outlet opening.

The invention provides for the means for operating the ganged valves to be a float operating in a cage below the mixing chamber with a control rod extended to the ganged valves or through a hydraulic piston and cylinder assembly, a diaphragm arrangement or an electric solenoid assembly or even a combination of these mechanisms.

### BRIEF DESCRIPTION OF THE DRAWINGS

These and other features of this invention will be described with reference to the accompanying diagrammatic drawings in which:

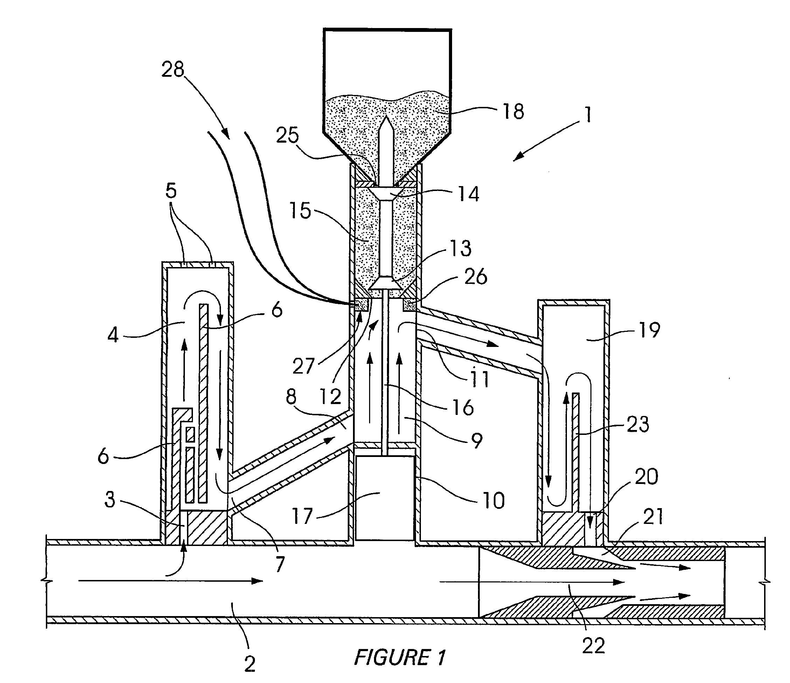

- Figure 1: shows a section through a first embodiment of a swimming pool chlorinator of the present invention, in which a vented chamber, mixing chamber and holding chamber are in line, and run parallel to a conduit; and
- Figure 2: shows a section through a second embodiment of a swimming pool chlorinator of the present invention, in which the vented chamber and the holding chamber are arranged concentrically around the mixing chamber.

### DETAILED DESCRIPTION WITH REFERENCE TO THE DRAWINGS

As illustrated the embodiment of the invention is suitable for the chlorination of water in a swimming pool.

The chlorinator (1) has a conduit (2) in the form of a length of pipe with means at each end for connection into the return flow pipeline of a standard swimming pool filter installation.

A subsidiary outlet (3) is provided through the wall of the conduit towards what, in use, will be the upstream end of the conduit. Above and around the outlet (3) is a vented chamber (4) with vent openings (5) through its upper end. Baffles (6) are included in the lower part of chamber (4) to ensure a smooth flow of water from the outlet (7) and afford the opportunity for entrained or dissolved air to separate out of the water and escape through the vent openings (5).

The outlet (7) is preferably positioned at the bottom of chamber (4) and is connected to an inlet (8) of a mixing chamber (9).

A cylinder (10) is formed in the bottom of the mixing chamber (9) which has an outlet (11) adjacent its upper end. The upper end is provided with a valve controlled second inlet (12). The valve (13) controlling this inlet (12) is ganged to a second valve (14) and these valves are located in a dosing compartment (15). The valve (14) controls an inlet into the compartment (15).

The ganged valves (13) and (14) are connected by means of rod (16) to a piston (17) in the cylinder (10).

The dosing compartment (15) has its end around inlet (25) adapted for connection to a supply hopper (18) for a supply of granular chlorine. This hopper may be in the form of a disposable container. A projection from the valve (14) extends through the inlet (25).

The outlet (11) from mixing chamber (9) is connected to the upper end of a holding chamber (19) and the outlet (20) from chamber (19) is connected through a subsidiary inlet (21) into the conduit (2). A venturi (22) is provided within the conduit at this location to provide an area of reduced pressure within a flow of water through the conduit.

Baffles (23) may be mounted within the holding chamber (19) and a non-return valve (not shown) may be fitted at the subsidiary inlet (21), and typically within the outlet (20). The purpose of the non-return valve is to stop blow back on start-up and, in addition, if a person were to hold their hand over the inlet to the pool (i.e. the end of conduit (2)), the non-return valve would prevent the resulting back pressure from flooding the chlorinator (1).

The chlorinator dispenser includes a drying arrangement (27) within or proximate the dosing compartment (15) for keeping air within the dosing compartment (15) and mixing chamber (9) dry. This prevents the granular chemical from clogging within the dosing compartment (15) prior to the granular chemical mixing with the liquid flowing through the dispenser (1).

The drying arrangement (27) may in turn comprise a heat source for generating heat so as to dry the air within the dosing compartment (15) and mixing chamber (9). Preferably, the heat source may comprise an electric element (26), which may be in the form of a coil, encapsulated within an epoxy resin or moulded into the dosing compartment (15), the element (26) being electrically connected to a power source via connecting wires (28). Alternatively, the heat source may comprise a light source.

The electric element (26) will typically have a 3 W power rating, but it is envisaged that this power rating can vary from between 3 W and 10 W. The nearby 12 V transformer associated with the pool light may be used, and, if need be, a 12 V step-down transformer may also be used to supply the correct safe power to the element (26).

In a further alternative embodiment, a solar panel may be used to power the element (26).

In use the chlorinator (1) above described can be fitted in the filter return pipe line at any convenient location. Generally this will be adjacent the filter where the chlorinator (1) will generally be sheltered from sight and the environment as well as being remote from the pool.

With the filtration plant pump off the water flowing therefrom will take up its natural level and where circumstances so dictate the vent openings (5) may require non-return valves. Proper location of the chlorinator above residual water level will avoid this requirement.

When the pump is switched on there will be flow through the conduit (2) and this flow will cause a rise in pressure at the inlet to the vented chamber (4) and the bottom of the piston (17). A drop in pressure will occur at the subsidiary inlet (21) into the conduit (2). This results in flow of water through the vented chamber (4) into the mixing chamber (9) and through the holding chamber (19) back into the conduit (2).

The effect of the increase in pressure on the piston (17) is to move the ganged valves so that valve (15) opens while at the same time valve (14) closes.

The compartment (15) will have filled with granular chemicals from the hopper (18) while there was no flow through the conduit (2) and the valves (13) and (14) closed and open respectively. The size of compartment (15) will be chosen to ensure that sufficient chemical will be introduced into mixing chamber (9) to provide proper treatment of the swimming pool water and will be determined by the volume of the pool and the frequency of operation of the filter installation. The compartment will fill with granular chemical every time the filter installation is switched off.

Preferably the dosing compartment (15) will have at least a transparent panel through which the contents can be viewed. This will make it possible to readily determine the chemical remains available from the hopper (18).

It will be appreciated that the projection from the valve (14) extends into the hopper (18) and movement of the valve (14) causes consequent movement of the projection in the material in the hopper and this results in agitation of the material to ensure free flow through the inlet (25) into the dosing compartment (15).

Commencement of flow through conduit (2) results in a dose of chemical to be discharged from the warmed dosing compartment (15) into the mixing chamber (9) where it mixes and dissolves in the water introduced from the vented chamber (4). This water is free from air, which further assists in reducing the tendency for bubbles to agglomerate with chemical in the walls of the chamber (9).

The water with dissolved and any entrained chemical not dissolved flows through the holding chamber (19) and through the venturi (22) and hence into the swimming pool where purification of the water takes place.

The invention thus provides an automatic dispenser of granular chemicals for dissolution in liquid which is particularly but not exclusively suited for the treatment of swimming pool water with a minimum of maintenance.

It will be appreciated that the embodiment described above can be modified in many ways without departing from the scope of the invention, with, for example, the piston and cylinder arrangement of the valves (13) and (14) being replaced with a float assembly. Alternatively power can be obtained through the filter pump switch to the coil of a solenoid. Here the solenoid plunger will be attached to the rod to which the valves are secured.

Also the venturi (22) could be replaced by a suitable jet pump to induce the low pressure necessary to induce flow through the chlorinator. Furthermore, the subsidiary outlet (3) could be fitted with a drain valve to assist in draining water from the vented chamber (4) when the flow through the conduit (2) ceases.

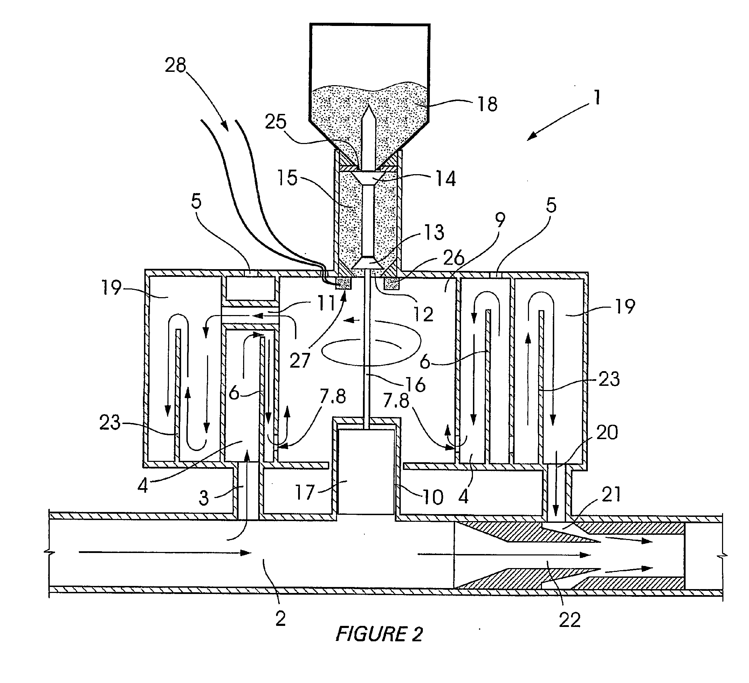

The layout of the chlorinator components can also be varied and a particularly convenient and aesthetic layout is the concentric arrangement indicated in Figure 2.

## Claims

1. A granular chemical dispenser (1) comprising a conduit (2) providing an open ended liquid flow passage, subsidiary inlet and outlet openings (21, 3) to and from the conduit (2) spaced apart along its length, means (22) for introducing an area of low pressure at the subsidiary inlet (21), the subsidiary outlet (3) opening into a vented chamber (4) connected to a mixing chamber (9) having a dosing compartment (15) opening into the top of the mixing chamber (9), ganged valves (13, 14) for controlling an inlet (25) and an outlet (12) to and from the dosing compartment (15), the mixing chamber (9) having an outlet (11) connected to the conduit subsidiary inlet (21), means (10, 16, 17) for operating the ganged valves (13, 14) on liquid flow through the passage and reversing this operation on the cessation of flow through the passage, **characterised in that** the dispenser (1) further comprises a drying arrangement (27) within or proximate the dosing compartment (15) for keeping air within the dosing compartment (15) and mixing chamber (9) dry, so as to prevent the granular chemical from clogging within the dosing compartment (15) prior to the granular chemical mixing with the liquid flowing through the dispenser (1).

2. The dispenser (1) of claim 1, wherein the drying arrangement (27) comprises a heat source for generating heat so as to dry the air within the dosing compartment (15) and mixing chamber (9).

3. The dispenser (1) of claim 2, wherein the heat source comprises an electric element (26) connected to a power source.

4. The dispenser (1) of claim 2, wherein the heat source comprises a light source.

5. The dispenser (1) of any one of the preceding claims, wherein the compartment inlet (25) comprises means for connection to a supply (18) of granular chemicals.

6. The dispenser (1) of any one of the preceding claims, wherein the conduit (2) includes means for connection into a liquid flow supply line, more particularly a return flow supply line from a swimming pool filter installation.

7. The dispenser (1) of any one of the preceding claims, which includes a holding chamber (19) between the mixing chamber (9) and the subsidiary inlet (21), with the vented chamber (4) including baffles (6) to smooth the flow there through.

8. The dispenser (1) of claim 7, wherein the vented chamber (4), mixing chamber (9) and holding chamber (19) are in line, and run parallel to the conduit (2).

9. The dispenser (1) of claim 7, wherein the vented chamber (4) and the holding chamber (19) are arranged concentrically around the mixing chamber (9).

10. The dispenser (1) of any one of the preceding claims, wherein a non-return valve is fitted proximate the subsidiary inlet (21).

11. The dispenser (1) of claim 10, wherein the non-return valve is fitted within the outlet opening (20).

12. The dispenser (1) of any one of the preceding claims, wherein the ganged valves (13, 14) are movable by the means (10, 16, 17) for operating the ganged valves (13, 14) to open the inlet (25) to the compartment when the outlet (12) is closed, and vice versa.

13. The dispenser (1) of any one of the preceding claims, wherein the valve (14) operating at the compartment inlet (25) carries a projection extending through the inlet (25).

14. The dispenser (1) of any one of the preceding claims, wherein the means (22) for inducing low pressure in the conduit (2) at the subsidiary inlet (21) includes a venturi (22) or a jet pump.

15. The dispenser (1) of any one of the preceding claims, wherein the means (10, 16, 17) for operating the ganged valves (13, 14) comprises a float operating in a cage below the mixing chamber (9) with a control rod extended to the ganged valves (13, 14) or through a hydraulic piston (17) and cylinder assembly (10), a diaphragm arrangement or an electric solenoid assembly, or a combination of these mechanisms.

## Patentansprüche

1. Ausgabegerät (1) für granulierte Chemikalien, umfassend einen Kanal (2), der einen Flüssigkeitsstromdurchgang mit einem offenen Ende bereitstellt, ergänzende Einlass- und Auslassöffnungen (21, 3) zu und aus dem Kanal (2), die entlang ihrer Länge im Abstand voneinander angeordnet sind, ein Mittel (22) zum Einführen eines Niederdruckbereichs am ergänzenden Einlass (21), wobei der ergänzende Auslass (3) sich in eine belüftete Kammer (4) öffnet, die verbunden ist mit einer Mischkammer (9) mit einem Dosierungsabteil (15), das sich in den oberen Teil der Kammer (9) öffnet, gruppierte Ventile (13, 14) zum Steuern eines Einlasses (25) und eines Auslasses (12) zum und aus dem Dosierungsabteil (15), wobei die Mischkammer (9) einen an den ergänzenden Kanaleinlass (21) angeschlossenen Auslass (11) aufweist, ein Mittel (10, 16, 17) zum Betreiben der gruppierten Ventile (13, 14) bei einem Flüssigkeitsstrom durch den Durchgang und zum Umkehren dieses Betriebs bei Beenden des Stroms durch den Durchgang, **dadurch gekennzeichnet, dass** das Ausgabegerät weiterhin innerhalb des oder benachbart zu dem Dosierungsabteil (15) eine Trocknungsanordnung (27) umfasst, um Luft innerhalb des Dosierungsabteils (15) und der Mischkammer (9) trocken zu halten, um zu verhindern, dass die granulierte Chemikalie innerhalb des Dosierungsabteils (15) verklumpt, bevor sich die granulierte Chemikalie mit der durch das Ausgabegerät (1) strömenden Flüssigkeit vermischt.

2. Ausgabegerät (1) nach Anspruch 1, wobei die Trocknungsanordnung (27) eine Wärmequelle zum Erzeugen von Wärme umfasst, um die Luft innerhalb des Dosierungsabteils (15) und der Mischkammer (9) zu trocknen.

3. Ausgabegerät (1) nach Anspruch 2, wobei die Wärmequelle ein mit einer Stromquelle verbundenes elektrisches Element (26) umfasst.

4. Ausgabegerät (1) nach Anspruch 2, wobei die Wärmequelle eine Lichtquelle umfasst.

5. Ausgabegerät (1) nach einem der vorhergehenden Ansprüche, wobei der Abteileinlass (25) Mittel zum Einbringen in eine Zufuhr (18) granulierter Chemikalien umfasst.

6. Ausgabegerät (1) nach einem der vorhergehenden Ansprüche, wobei der Kanal (2) Mittel zum Einbringen in eine Flüssigkeitsstrom-Zufuhrleitung, insbesondere eine Rückstrom-Zufuhrleitung von einer Schwimmbeckenfilter-Einrichtung, umfasst.

7. Ausgabegerät (1) nach einem der vorhergehenden Ansprüche, umfassend eine Aufnahmekammer (19) zwischen der Mischkammer (9) und dem ergänzenden Einlass (21), wobei die belüftete Kammer (4) Ablenkplatten (6) umfasst, um den dort durchströmenden Strom zu beruhigen.

8. Ausgabegerät (1) nach Anspruch 7, wobei die belüftete Kammer (4), die Mischkammer (9) und die Aufnahmekammer (19) in Reihe sind und parallel zu dem Kanal (2) arbeiten.

9. Ausgabegerät (1) nach Anspruch 7, wobei die belüftete Kammer (4) und die Aufnahmekammer (19) konzentrisch um die Mischkammer (9) herum angeordnet sind.

10. Ausgabegerät (1) nach einem der vorhergehenden Ansprüche, wobei ein Rückschlagventil benachbart zu dem ergänzenden Einlass (21) eingebracht ist.

11. Ausgabegerät (1) nach Anspruch 10, wobei das Rückschlagventil innerhalb der Auslassöffnung (20) eingebracht ist.

12. Ausgabegerät (1) nach einem der vorhergehenden Ansprüche, wobei die gruppierten Ventile (13, 14) durch das Mittel (10, 16, 17) zum Betreiben der gruppierten Ventile (13, 14) bewegbar sind, um den Einlass (25) zu dem Abteil zu öffnen, wenn der Auslass (12) geschlossen ist, und umgekehrt.

13. Ausgabegerät (1) nach einem der vorhergehenden Ansprüche, wobei das am Abteileinlass (25) betriebene Ventil (14) eine sich durch den Einlass (25) erstreckende Hervorstehung trägt.

14. Ausgabegerät (1) nach einem der vorhergehenden Ansprüche, wobei das Mittel (22) zum Erzeugen eines Niederdrucks in dem Kanal (2) am ergänzenden Einlass (21) einen Lufttrichter (22) oder eine Strahlpumpe umfasst.

15. Ausgabegerät (1) nach einem der vorhergehenden Ansprüche, wobei das Mittel (10, 16, 17) zum Betreiben der gruppierten Ventile (13, 14) einen in einem Gehäuse unter der Mischkammer (9) arbeitenden Schwimmer mit einer Steuerstange, die sich zu den gruppierten Ventile (13, 14) erstreckt oder durch einen Hydraulikkolben (17) und eine Zylinderbaugruppe (10), eine Diaphragmaanordnung oder eine Elektromagnetbaugruppe oder eine Kombination dieser Mechanismen hindurch, umfasst.

## Revendications

1. Distributeur de produit chimique sous de granulés (1) comprenant une conduite (2) fournissant un passage d'écoulement de liquide à extrémités ouvertes, des ouvertures d'entrée et de sortie supplémentaires (21, 3) vers la conduite (2) et à partir de celle-ci espacées le long de sa un moyen (22) à introduire une zone de faible pression au niveau de rentrée supplémentaire (21), la sortie supplémentaire (3) s'ouvrant une chambre mise à l'évent (4) reliée à une chambre de mélange (9) comportant un compartiment de dosage (15) s'ouvrant dans le sommet de la chambre de mélange (9), des vannes couplées (13, 14) destinées à une entrée (25) et une sortie (12) vers le compartiment de dosage (15) est à partir de celui-ci, la chambre de mélange (9) comportant une sortie (11) reliée à l'entrée supplémentaire de conduite (21), une moyen (10, 16, 17) destiné à actionner les vannes couplées (13, 14) pour un écoulement de liquide à travers le passage et à inverser cet actionnement pour l'arrêt d'écoulement à travers le passage, **caractérisé en ce que le distributeur (1) comprend en outre** un agencement de séchage (27) à l'intérieur du compartiment de dosage (15) ou à proximité de celui-ci en vue de conserver de l'air à l'intérieur du compartiment de dosage (15) et de la chambre de mélange (9) au sec, de manière à empêcher le produit chimique sous forme de granulés de s'agglomérer à l'intérieur du compartiment de dosage (15) avant le mélange de produit chimique sous de granulés avec l'écoulement de liquide à travers le distributeur (1).

2. Distributeur (1) selon la revendication 1, dans lequel l'agencement de séchage (27) comprend une source de chaleur destinée à générer de la chaleur de manière à sécher l'air à l'intérieur du compartiment de dosage (15) et de la chambre de mélange (9).

3. Distributeur (1) selon la revendication 2, dans lequel la source de chaleur un élément électrique (26) relié à une source d'alimentation.

4. Distributeur (1) selon la revendication 2, dans lequel la source de chaleur comprend une source de lumière.

5. Distributeur (1) selon l'une quelconque des revendications précédentes, dans lequel l'entrée de compartiment (25) comprend un moyen destiné à être relié à une alimentation (18) en produits chimiques sous de granulés.

6. Distributeur (1) selon !'une quelconque des revendication précédentes, dans lequel la conduite (2) inclut un moyen destiné à être relié dans une ligne d'alimentation en écoulement liquide, plus particulièrement une ligne d'alimentation en écoulement de retour provenant d'une installation de filtre de piscine.

7. Distributeur(1) l'une quelconque des revendications précédentes, lequel une chambre, de maintien (19) entre la chambre de mélange (9') et l'entrée supplémentaire (21), la chambre mise à l'évent (4) incluant des chicanes (6) pour lisser l'écoulement à travers celles-ci.

8. Distributeur (1) selon la revendication 7, dans lequel la chambre mise à l'évent (4), la chambre de mélange (9) et la chambre de maintien (19) sont en série, et courent de manière parallèle à la conduite (2).

9. Distributeur (1) selon la revendication 7, dans lequel la chambre mise à l'évent (4) et la chambre de maintien (19) sont de manière concentrique autour de la chambre de mélange (9).

10. Distributeur (1) selon l'une quelconque des revendications précédentes, dans lequel une vanne de non-retour est installée à proximité de l'entrée supplémentaire (21).

11. Distributeur (1) selon la revendication 10, dans lequel la vanne de non-retour est installée à l'intérieur de l'ouverture de sortie (20).

12. Distributeur (1) selon l'une quelconque des revendications précédentes, dans lequel les vannes couplées (13, 14) sont déplaçables par l'intermédiaire du moyen (10, 16, 17) destiné à actionner les vannes couplées (13, 14) pour l'entrée (25) vers le compartiment lorsque la sortie (12) est fermée, et vice-versa.

13. Distributeur (1) selon l'une quelconque des revendications précédentes, dans lequel la vanne (14) fonctionnant au niveau de l'entrée de compartiment (25) supporte une protubérance s'étendant à travers l'entrée (25).

14. Distributeur (1) selon l'une quelconque des revendications précédentes, dans lequel le moyen (22) destiné à induire une faible pression dans la conduite (2) au niveau de l'entrée supplémentaire (21) un venturi (22) ou une pompe à jet.

15. Distributeur (1) selon l'une quelconque des revendications précédentes, dans lequel le moyen (10, 16, 17) destiné à actionner les vannes couplées (13, 14) comprend un flotteur fonctionnant dans une cage en dessous de la de mélange (9) dotée d'une tige de commande déployée vers les vannes couplées (13, 14) ou par le biais d'un piston hydraulique (17) et d'un ensemble de cylindre (10), d'un agencement de diaphragme ou d'un ensemble solénoïde électrique, ou d'une combinaison de ces mécanismes.
